# EUROPEAN PATENT SPECIFICATION

(11) **EP 1 739 292 B1**
(45) Date of publication and mention of the grant of the patent: **13.02.2008**
(21) Application number: 05253996.2
(22) Date of filing: 28.06.2005
(51) Int. Cl.: F01N 11/00

(54) **A method of diagnosing the effectiveness of a catalytic device in the exhaust system of a multi-cylinder internal combustion engine**
Verfahren zum Feststellen der Wirksamkeit einer Katalysatorvorrichtung im Abgasstrang einer mehrzylindrigen Brennkraftmaschine
Procédure de diagnostique de l'éfficacité d'un dispositif catalytique dans le système d'échappement d'un moteur à combustion interne multi-cylindres

(43) Date of publication of application: 03.01.2007
(73) Proprietor: Delphi Technologies, Inc., Troy, MI 48007 (US)
(72) Inventor: Kern, Bernhard, 8551 Noerdange (LU)
(74) Representative: Jones, Keith William

(56) References cited:
- EP-A- 0 466 311
- US-A- 5 018 348
- US-A- 5 172 320
- US-B1- 6 651 422

## Description

The present invention relates to a method of diagnosing the effectiveness of a catalytic device in the exhaust system of a multi-cylinder internal combustion engine, and in particular to a method of diagnosing the effectiveness of a three way catalyst using only a single O₂ sensor.

The exhaust gases of an internal combustion engine contains various amounts of unburnt hydrocarbons (HC), carbon monoxide (CO) and nitrous oxides (NOx). Emission of these materials to the atmosphere is undesirable. The problem is more acute in urban areas having a high concentration of motor vehicles. In most countries, legislation places strict limits on the emission levels of such materials from vehicle exhausts and thus required vehicle manufacturers to install systems to reduce such emissions.

In order to reduce the emission of such harmful materials and gases to an acceptable level, it is known to provide a catalytic device in the exhaust system of an internal combustion engine to oxidise CO and HC. In gasoline fuelled engines such catalytic devices commonly comprise three way catalysts, wherein the catalytic device, as well as oxidising CO and HC, reduces NOx.

In order to ensure that a vehicle continues to comply with the emission regulations, it is desirable to monitor the effectiveness of the catalytic device throughout the lifetime of the vehicle.

Most vehicles are fitted with at least one O₂ sensor in the exhaust system downstream of the combustion chamber to provide feedback to the engine management system of the internal combustion engine to assist in maintaining the air/fuel ratio of the intake mixture at a desired level (usually stochiometric in the case of a gasoline fuelled internal combustion engine).

The O₂ sensor, as well as other sensors for detecting ambient conditions and operating parameters of the engine, is used to control the air/fuel ratio as described above. However, such correction of the air/fuel ratio only happens after a variance from the ideal air/fuel ratio is detected. Modern three way catalysts are designed to deal with the fluctuations in the oxygen content of the exhaust gases due to fluctuations in the air/fuel ratio of the mixture supplied to the engine by storing O₂ when the air/fuel ratio is lean, leading to an increase in the O₂ content of the exhaust gases upstream of the catalytic device, and releasing stored O₂ when the air/fuel ratio is rich, leading to a reduction in the O₂ content of the exhaust gases upstream of the catalytic device. To achieve this, the catalytic device contains cerium and/or other rare earth materials in the washcoat of the catalytic device.

Known methods of diagnosing the effectiveness of a catalytic device require the use of two O₂ sensors, one upstream of the catalytic device and one downstream of the catalytic device, such that the O₂ content of the exhaust gases upstream and downstream of the catalytic device can be determined to assess the effectiveness of the catalyst. However, the addition of a further O₂ sensor increases the cost and complexity of the exhaust system. For example such a method is disclosed in EP 0 466 311 A.

Further a single O₂ sensor system to monitor the O₂ storage capacity of a catalyst is known from US 5, 172, 320 A.

According to the present invention there is provided a method of diagnosing the effectiveness of a catalytic device in the exhaust system of a multi-cylinder internal combustion engine having an engine management system capable of individually controlling the air/fuel ratio of each cylinder of the engine and a single O₂ sensor provided within the catalytic device, said method comprising:-
a) increasing the air/fuel ratio of a first cylinder or group of cylinders while simultaneously decreasing the air/fuel ratio of a second cylinder or group of cylinders;
b) determining the time taken for the O₂ sensor to detect the change in air/fuel ratio;
c) determining the effectiveness of the catalytic device based on the time taken for the O₂ sensor to detect the change in air/fuel ratio.

Preferably the increase of the air/fuel ratio of the first cylinder or group of cylinders is proportional to the decrease of the air/fuel ratio of the second cylinder or group of cylinders such that the overall air/fuel ratio averaged over all cylinders of the engine does not change such that there is no significant negative impact on tailpipe emissions during the catalytic device diagnostic process.

In a preferred embodiment of the present invention an O₂ sensor is provided in a three way catalyst of a typical four cylinder gasoline fuelled internal combustion engine downstream of the washcoat of the catalyst.

As discussed above, the washcoat contains Cerium or other rare earth metals to absorb excess O₂ from the exhaust gases when the air/fuel ratio becomes rich and to release such stored O₂ when the air/fuel ration becomes lean. This effectively damps out variations in the oxygen level of the exhaust gases caused by fluctuations in the air/fuel ratio of the mixture supplied to the engine. As the catalytic device ages, the ability of the washcoat to store and release O₂ diminishes. This property can be used to diagnose the effectiveness of the catalyst over the lifetime of the vehicle by means of the following diagnostic routine.

Firstly, the fuel injection timing of cylinders 1 and 4 is incrementally varied to increase the air/fuel ratio of one cylinder while reducing the air/fuel ration of the other cylinder such that the overall or average air/fuel ratio of the mixture supplied to the engine does not change. The O₂ sensor is monitored and the time interval between the start of the air/fuel ratio variation and the detection of the change in air/fuel ratio by the O₂ sensor (i.e. indicated by a change in the detected O₂ level) is determined. This time interval is indicative of the oxygen storage ability of the washcoat, the more oxygen stored, the longer it takes for the O₂ sensor downstream of the washcoat to detect a change in the O₂ level of the exhaust gases, the stored oxygen effectively damping the variation in air/fuel ratio.

As stated above, the oxygen storage ability of the washcoat deteriorates over time. Thus the time interval between the initiation of the variation in air/fuel and the detection of the air/fuel ratio variation by the O₂ sensor can be correlated to catalyst performance and used to determine the effectiveness of the catalyst over time.

The variation of the air/fuel ration of opposing cylinders (i.e. cylinder 1 and cylinder 4 or cylinder 2 and cylinder 3) is preferred since such cylinders have pistons moving parallel but with combustion 360° out of phase to provide the greatest variation in individual air/fuel ratio without affecting the overall air/fuel ratio of the engine which would otherwise have a detrimental effect on exhaust gas emissions. In an alternative embodiment, the air/fuel ratio of an adjacent pair of cylinders (i.e. cylinders 1 and 2 or cylinders 3 and 4) may be increased while the air/fuel ratio of the remaining pair of cylinders may be reduced, again maintaining the overall air/fuel ratio constant.

Of course, the same effect in changing air/fuel ratio and determining the time interval before the change is detected can be achieved by changing the air/fuel ratio across all cylinders of the engine. However, this would be undesirable as it would result in an increase in exhaust gas emissions.

## Claims

1. A method of diagnosing the effectiveness of a catalytic device in the exhaust system of a multicylinder internal combustion engine having an engine management system capable of individually controlling the air/fuel ratio of each cylinder of the engine and a single O₂ sensor provided within the catalytic device, said method comprising:-
a) increasing the air/fuel ratio of a first cylinder or group of cylinders while simultaneously decreasing the air/fuel ratio of a second cylinder or group of cylinders;
b) determining the time taken for the O₂ sensor to detect the change in air/fuel ratio;
c) determining the effectiveness of the catalytic device based on the time taken for the O₂ sensor to detect the change in air/fuel ratio.

2. A method according to claim 1, wherein the increase of the air/fuel ratio of the first cylinder or group of cylinders is proportional to the decrease of the air/fuel ratio of the second cylinder or group of cylinders such that the overall air/fuel ratio averaged over all cylinders of the engine does not change.

3. A method according to claim 1 or claim 2, wherein the pistons of the first and second cylinders move in parallel relationship.

4. A method according to any preceding claim, wherein the air/fuel ratio of said first and second cylinders or groups of cylinders is varied by altering the fuel injection timing of said first and second cylinders or groups of cylinders.

5. A method as claimed in any preceding claim, wherein the catalytic device is a three way cataylst.

## Patentansprüche

1. Ein Verfahren zur Diagnose der Effektivität einer katalytischen Anordnung in dem Abgassystem eines Mehrzylinderverbrennungsmotors mit einem Motor-Managementsystem, das dazu fähig ist, das Luft-Kraftstoff-Verhältnis jedes Zylinders des Motors individuell zu steuern, und einem einzelnen O₂-Sensor, der innerhalb der katalytischen Anordnung bereitgestellt ist, wobei das Verfahren Folgendes beinhaltet:
a) Erhöhen des Luft-Kraftstoff-Verhältnisses eines ersten Zylinders oder einer Gruppe von Zylindern, wobei gleichzeitig das Luft-Kraftstoff-Verhältnis eines zweiten Zylinders oder einer Gruppe von Zylindern verringert wird;
b) Bestimmen der benötigten Zeit für den O₂-Sensor, um die Änderung in dem Luft-Kraftstoff-Verhältnis zu ermitteln;
c) Bestimmen der Effektivität der katalytischen Anordnung auf der Grundlage der benötigten Zeit für den O₂-Sensor, um die Änderung in dem Luft-Kraftstoff-Verhältnis zu ermitteln.

2. Verfahren gemäß Anspruch 1, wobei die Erhöhung des Luft-Kraftstoff-Verhältnisses des ersten Zylinders oder der Gruppe von Zylindern proportional zur Verringerung des Luft-Kraftstoff-Verhältnisses des zweiten Zylinders oder der Gruppe von Zylindern ist, so dass sich das gesamte Luft-Kraftstoff-Verhältnis im Durchschnitt über alle Zylinder des Motors nicht ändert.

3. Verfahren gemäß Anspruch 1 oder Anspruch 2, wobei sich die Kolben des ersten und des zweiten Zylinders in paralleler Beziehung bewegen.

4. Verfahren gemäß einem der vorhergehenden Ansprüche, wobei das Luft-Kraftstoff-Verhältnis des ersten und des zweiten Zylinders oder der Gruppe von Zylindern durch das Abändern der Kraftstoffeinspritzverstellung des ersten und des zweiten Zylinders oder der Gruppe von Zylindern variiert wird.

5. Verfahren gemäß einem der vorhergehenden Ansprüche, wobei die katalytische Anordnung ein Dreiwegkatalysator ist.

## Revendications

1. Un procédé pour diagnostiquer l'efficacité d'un dispositif catalytique dans le système d'échappement d'un moteur à combustion interne multicylindre disposant d'un système de gestion de moteur capable de contrôler individuellement le rapport air/carburant de chaque cylindre du moteur et d'un capteur de O₂ unique fourni au sein du dispositif catalytique, ledit procédé comprenant :
a) augmenter le rapport air/carburant d'un premier cylindre ou groupe de cylindres tout en diminuant simultanément le rapport air/carburant d'un deuxième cylindre ou groupe de cylindres ;
b) déterminer le temps qu'il faut au capteur de O₂ pour détecter le changement dans le rapport air/carburant ;
c) déterminer l'efficacité du dispositif catalytique sur la base du temps qu'il faut au capteur de O₂ pour détecter le changement dans le rapport air/carburant.

2. Un procédé selon la revendication 1, dans lequel l'augmentation du rapport air/carburant du premier cylindre ou groupe de cylindres est proportionnelle à la diminution du rapport air/carburant du deuxième cylindre ou groupe de cylindres de telle sorte que le rapport air/carburant global moyen pris sur l'ensemble des cylindres du moteur ne change pas.

3. Un procédé selon la revendication 1 ou la revendication 2, dans lequel les pistons des premier et deuxième cylindres se déplacent en relation parallèle.

4. Un procédé selon n'importe quelle revendication précédente, dans lequel on fait varier le rapport air/carburant desdits premier et deuxième cylindres ou groupes de cylindres en modifiant l'avance à l'injection de carburant desdits premier et deuxième cylindres ou groupes de cylindres.

5. Un procédé tel que revendiqué dans n'importe quelle revendication précédente, dans lequel le dispositif catalytique est un catalyseur à trois voies.
